# EUROPEAN PATENT SPECIFICATION

(11) **EP 1 331 744 B1**
(45) Date of publication and mention of the grant of the patent: **22.10.2008**
(21) Application number: 03000231.5
(22) Date of filing: 08.01.2003
(51) Int. Cl.: H04B 3/56

(54) **Power line communication apparatus**
Geräte zur Kommunikation über Stromversorgungsleitungen
Appareil de communication par lignes de puissance

(30) Priority: 23.01.2002 KR 2002003956
(43) Date of publication of application: 30.07.2003
(73) Proprietor: LG ELECTRONICS INC., Seoul (KR)
(72) Inventor: Seong, See-Poong, Gangnam-Gu, Seoul (KR)
(74) Representative: Cohausz & Florack

(56) References cited:
- EP-A- 0 877 494
- WO-A-98/33258

## Description

### 1. Field of the Invention

The present invention relates to a power line communication apparatus and, more particularly, to a power line communication apparatus that is capable of eliminating an electromagnetic interference (EMI) generated when a communication is performed through a power line.

### 2. Description of the Background Art

Recently, as a data communication system is highly advanced, system users can take advantage of the high power of systems by connecting several systems through a network. That is, the network accelerates common operations between systems by allowing the systems to communicate with each other and share applications and data.

When several systems are intended to be communicated with each other, in order to avoid a disorder in communication, the sharing of applications and data between systems sharing a network is performed effectively and in an orderly fashion by virtue of a communication protocol which determines a procedure of a communication control.

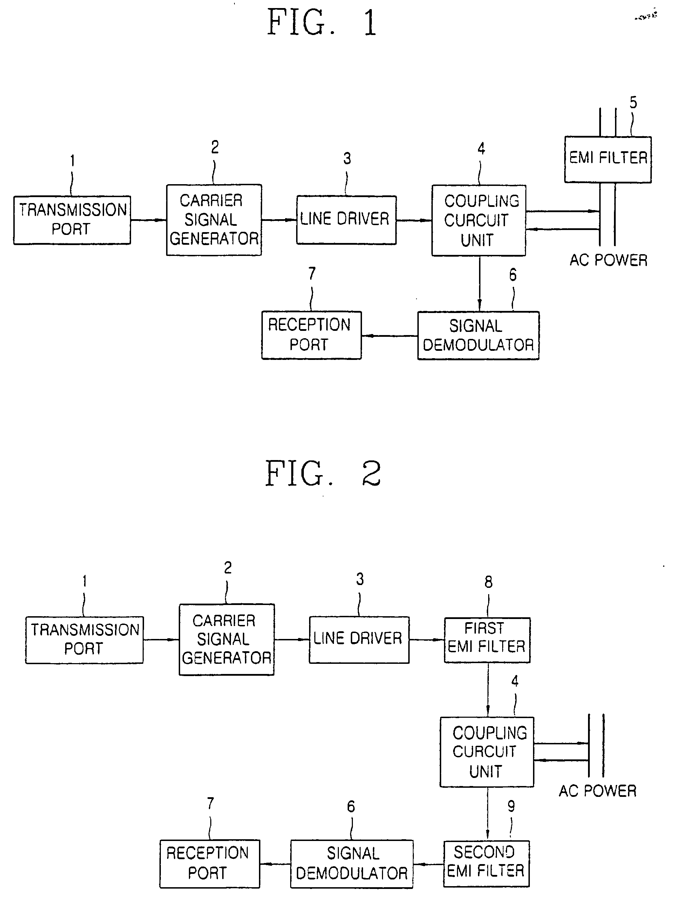

Figure 1 is a block diagram showing the construction of a power line communication apparatus in accordance with a conventional art.

As shown in Figure 1, a power line communication apparatus includes: a carrier signal generator 2 for generating a carrier signal and transmitting diverse transmission signals inputted through a transmission port 1; a line driver 3 for receiving a transmission signal from the carrier signal generator 2 and amplifying the received transmission signal to a certain level; a coupling circuit unit 4 for being matched with a power line and transmitting the transmission signal with a certain level amplified by the line driver 3; a signal demodulator 6 for demodulating diverse reception signals received from the power line through the coupling circuit unit 4 and transmitting the demodulated reception signal to a reception port 7; and an electromagnetic interference (EMI) filter 5 installed at the power line, removing a higher harmonics component of the reception signal/transmission signal flowing at the power line; outputting the higher harmonics component-removed transmission signal, and receiving the higher harmonics component-removed reception signal.

The operation of the power line communication apparatus in accordance with the conventional art will now be described in detail.

First, when a specific transmission signal is transmitted to the power line through the power line communication apparatus, the carrier signal generator 2 of the power line communication apparatus generates a carrier signal and transmits a transmission signal inputted through the transmission port 1 to the line driver 3.

The line driver 3 receives the transmission signal, amplifies the received transmission signal to a certain level, and outputs the amplified transmission signal to the coupling circuit unit 4. At this time, the coupling circuit unit 4 transforms the transmission signal which has been amplified by the line driver 3, and transmits the transformed transmission signal to a destination through the power line. At this time, the EMI filter 4 installed at the power line removes the higher harmonics component of the transmission signal.

Meanwhile, when a specific reception signal is received from the power line through the power line communication apparatus, the coupling circuit unit 4 receives a reception signal from the power line through the EMI filter 5, transforms and clamps the received reception signal to convert it to a square wave signal, and transmits the square-wave signal to the signal demodulator 6.

The signal demodulator 6 demodulates the square-wave signal inputted through the coupling circuit unit 4 and transmits it to the reception port 7 of the power line communication apparatus.

The conventional art, however, has a problem that since the EMI filter of the power line communication apparatus is installed at the power line where an AC power flows, the capacity of the EMI filter 5 is increased.

In addition, as the capacity of the EMI filter of the power line communication apparatus is increased, the EMI filter is accordingly increased in its size.

Moreover, the increase in the capacity of the EMI filter of the power line communication apparatus inevitably leads to rise in a fabrication cost of the EMI filter.

### SUMMARY OF THE INVENTION

Therefore, an object of the present invention is to provide a power line communication apparatus that is capable of reducing a capacity, a size and a cost of an EMI filter by installing the EMI filter at a DC signal line, not at a power line.

To achieve these and other advantages and in accordance with the purpose of the present invention, as embodied and broadly described herein, there is provided a power line communication apparatus including: a carrier signal generator for generating a carrier signal and transmitting a transmission signal inputted through a transmission port; a line driver for amplifying the received transmission signal; a first EMI filter for removing a noise of the amplified transmission signal; a coupling circuit unit for being matched with a power line, transmitting the transmission signal outputted from the first EMI filter to the power line, and receiving a reception signal transmitted from the power line; a second EMI filter for removing a noise of the reception signal inputted through the coupling circuit unit; and a signal demodulator for demodulating the reception signal of which noise has been removed by the second EMI filter, and transmitting the demodulated information to a reception port.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a block diagram showing the construction of a power line communication apparatus in accordance with a conventional art;
Figure 2 is a block diagram showing the construction of a power line communication apparatus in accordance with the present invention;
Figure 3 is a graph showing a higher harmonics component generated by a PLC;
Figure 4 is a circuit diagram showing the construction of an EMI filter in accordance with the present invention; and
Figures 5A and 5B are graphs showing frequency characteristics of the EMI filter mounted at a signal line of an indoor unit and an outdoor unit when the present invention is adopted to an air-conditioner.

### DETAILED DESCRIPTION OF THE PREFERRED EMBODIMENTS

Reference will now be made in detail to the preferred embodiments of the present invention, examples of which are illustrated in the accompanying drawings.

A power line communication apparatus in accordance with a preferred embodiment of the present invention, that is capable of reducing a capacity, a size and a cost of an EMI filter by installing the EMI filter at a DC signal line, rather than installing at a power line, will now be described with reference to Figures 2 to 5.

Figure 2 is a block diagram showing the construction of a power line communication apparatus in accordance with the present invention.

As shown in Figure 2, a power line communication apparatus in accordance with the present invention includes: a carrier signal generator 2 for generating a carrier signal and transmitting a transmission signal inputted through a transmission port 1; a line driver 3 for receiving the transmission signal from the carrier signal generator 2, and amplifying the received transmission signal to a certain level; a first EMI filter 8 for removing a noise of the transmission signal which has been amplified by the line driver 3; a coupling circuit unit 4 for being matched with a power line, transmitting the transmission signal of which noise has been removed by the first EMI filter 8; and receiving a reception signal from the power line; a second EMI filter 9 for removing a noise of the reception signal inputted form the coupling circuit unit4; and a signal demodulator 6 for demodulating the reception signal of which noise has been removed by the second EMI filter 9, and transmitting the demodulated signal to a reception port 7.

The operation of the power line communication apparatus and a process of transmitting a transmission signal to the power line through the power line communication apparatus and receiving the reception signal from the power line will now be described in detail.

First, when a specific transmission signal is transmitted to the power line through the power line communication apparatus, the carrier signal generator 2 of the power line communication apparatus generates the carrier signal and transmits the transmission signal inputted through the transmission port 1 to the line driver 3.

The line driver 3 receives the transmission signal, amplifies the inputted transmission signal to a certain level, and outputs the amplified transmission signal to the first EMI filter 8.

The first EMI filter 8 receives the amplified transmission signal from the line driver 3, filters a higher harmonics distortion of the inputted transmission signal, and outputs the filtered transmission signal to the coupling circuit unit 4.

The coupling circuit unit 4 receives the filtered transmission signal from the first EMI filter 8, transforms the inputted transmission signal, and transmits the transformed transmission signal to a destination through the power line.

Meanwhile, when a specific reception signal is received from the power line through the power line communication apparatus, the coupling circuit unit 4 receives the reception signal from the power line, transforms and clamps the received reception signal to a square-wave signal, and applies the square-wave signal to the second EMI filter 9.

The second EMI filter 9 receives the square-wave signal from the coupling circuit unit 4, filters a higher harmonics distortion of the square-wave signal, and outputs the filtered square-wave signal to the signal demodulator 6.

Thereafter, the signal demodulator 6 demodulates the square-wave signal inputted through the second EMI filter 9, and transmits the demodulated square-wave signal to the reception port 7 of the power line communication apparatus.

The first and second EMI filters 8 and 9 are not installed at the power line where the AC component flows like in the conventional art but connected to the coupling circuit unit 4 connected to a DC signal line where a DC component flows, in order to cancel a noise.

The first EMI filter 8 is electrically connected between the line driver 3 and the coupling circuit unit 4 to cancel a noise of the transmission signal outputted from the line driver 3. The second EMI filter 9 is electrically connected between the coupling circuit unit 4 and the signal demodulator 6 and cancels a noise of the reception signal outputted from the coupling circuit unit 4.

The first and second EMI filters 8 and 9 are, respectively, designed to have a time constant having suitable frequency characteristics according to an input signal. That is, they are designed to remove a higher harmonics component generated by the power line communication (PLC).

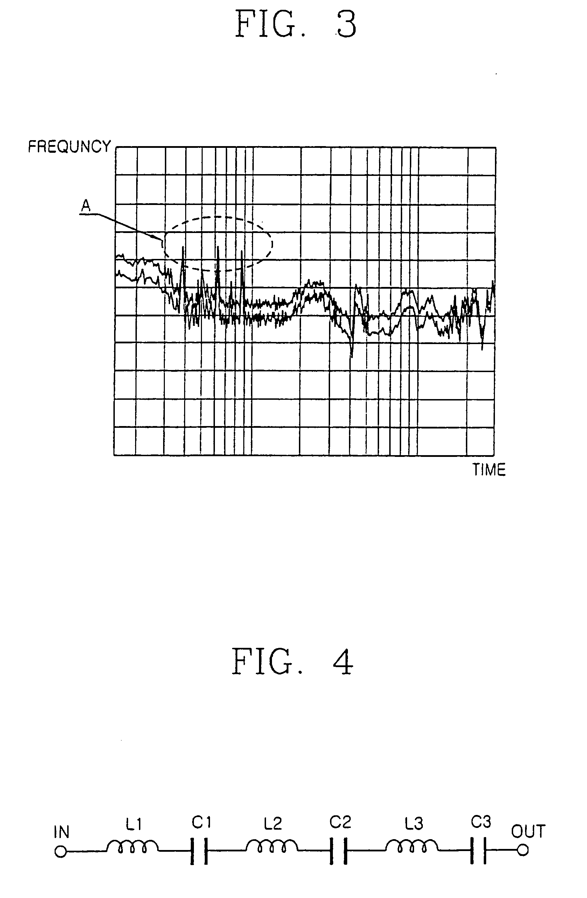

Figure 3 is a graph showing a higher harmonics component generated by the PLC.

As shown in Figure 3, the first and second EMI filters 8 and 9 are designed to have a time constant having frequency characteristics according to an input signal in order to remove higher harmonics component such as a portion 'A'. The construction of first and second EMI filters 8 and 9 will now be described with reference to Figure 4.

Figure 4 is a circuit diagram showing the construction of an EMI filter in accordance with the present invention.

As shown in Figure 4, first and second EMI filters 8 and 9 consist of a plurality of coils L1, L2 and L3 connected in series, and a plurality of capacitors C1, C2 and C3 electrically connected to the plurality of coils, respectively. Namely, in the present invention, the EMI filters are not installed at the power line like in the conventional art but at the coupling circuit unit 4. Therefore, the capacity and size of the first and second EMI filters 8 and 9 can be more reduced than those of the EMI filter (reference numeral 5 in Figure 1) installed at the power line in accordance with the conventional art. At this time, first and second EMI filters 8 and 9 are, approximately, L:W:H = 20:10:10 in size, which is smaller than the typical size of L:W:H = 50:30:30 of the filter mounted at the power line in the conventional art. Herein, 'L' is length, W is width, and H is height, and their unit is mm.

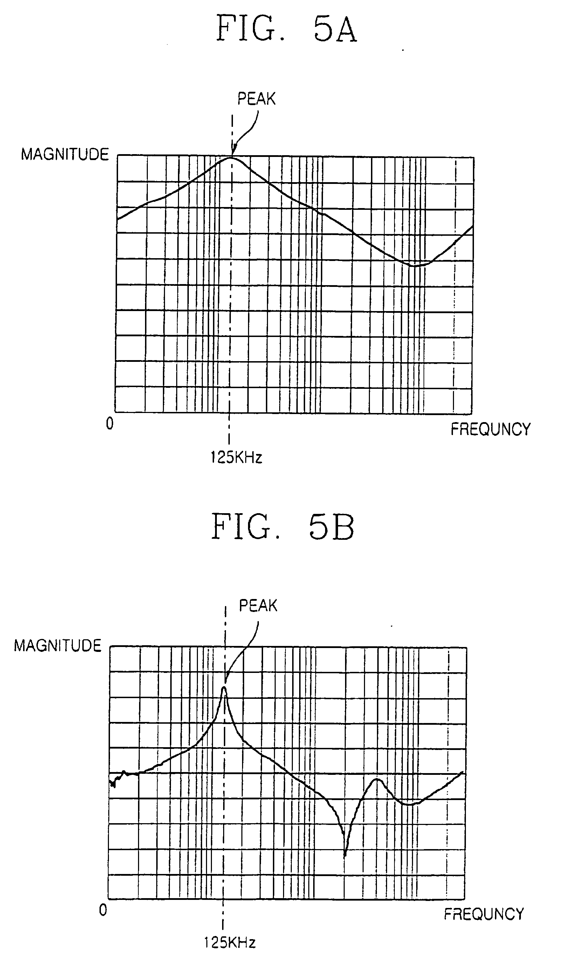

Figures 5A and 5B are graphs showing frequency characteristics of the EMI filter mounted at a signal line of an indoor unit and an outdoor unit when the present invention is adopted to an air-conditioner.

As shown in Figures 5A and 5B, the horizontal axis signifies a frequency, and a vertical axis signifies a magnitude. In other words, those graphs shows that output signals are measured when an input signal with a magnitude of '1' is applied to first and second EMI filters 8 and 9, and a ratio of input/output is indicated at the vertical axis and a frequency of the input signal at that time is indicated at the horizontal axis.

For example, the frequency at the peak portion of Figures 5A and 5B is 125 kHz band, and has the characteristics that the ratio of input/output is the greatest at 126 kHz. That is, first and second EMI filters 8 and 9 may be fabricated so that it pass only 125 kHz frequency band. Herein, 125 kHz is a carrier frequency for transmitting a transmission/reception signal to a destination through the power line, and the first and second EMI filters 8 and 9 can transmit the transmission/reception signal without a noise by the 125 kHz carrier frequency by cutting off frequency bands other than 125 kHz frequency band.

Namely, when the transmission/reception signal passes the power line together with other frequency band than 125 kHz, a noise, that is, an EMI, is generated, but in the present invention, since the first and second EMI filters 8 and 9 cuts off frequency bands other than 125 kHz, the transmission/reception signal can be transmitted to a destination through the power line without generation of a noise. In this respect, since 125 kHz is below 150 kHz ∼ 30 MHz, an EMI restriction range, transmission of transmission/reception signal would not cause a noise.

Accordingly, by installing the EMI filters 8 and 9 at the DC signal line (the coupling circuit unit 4) to cut off the higher harmonics component (EMI) generated due to the power line communication, the capacity, the size and the cost of the EMI filter can be reduced.

As so far described, the power line communication apparatus of the present invention has the advantage that the capacity, the size and the cost of the EMI filter can be reduced by installing the EMI filter for canceling a noise at the DC signal line.

## Claims

1. A power line communication apparatus comprising:
a carrier signal generator (2) for generating a carrier signal and transmitting a transmission signal inputted through a transmission port (1);
a line driver (3) for amplifying the received transmission signal;
a first EMI filter (8) for removing a noise of the amplified transmission signal;
a coupling circuit unit (4) for being matched with a power line, transmitting the transmission signal outputted from the first EMI filter (8) to the power line, and receiving a reception signal transmitted from the power line;
a second EMI filter (9) for removing a noise of the reception signal inputted through the coupling circuit unit; and
a signal demodulator (6) for demodulating the reception signal of which noise has been removed by the second EMI filter, and transmitting the demodulated information to a reception port (7).

2. The apparatus of claim 1, wherein first and second EMI filters (8,9) comprises a plurality of coils (L1, L2, L3) connected in series and a plurality of capacitors (C1, C2, C3) electrically connected to the plurality of coils.

3. The apparatus of claim 2, wherein first and second EMI filters (8,9) comprises a plurality of coils (L1, L2, L3) and a plurality of capacitors (C1, C2, C3), so as to have a time constant of specific frequency characteristics according to an input signal.

4. The apparatus of claim 2, wherein the sizes of the plurality of coils (L1, L2, L3) are L:W:H = 20:10:10, wherein 'L' is a length, 'W' is a width and 'H' is a height, and their unit is mm.

## Patentansprüche

1. Leistungsnetzleitungs-Kommunikations-Vorrichtung, umfassend:
einen Trägersignalgenerator (2) zum Erzeugen eines Trägersignals und Übertragen eines Übertragungssignals, das durch einen Übertragungsport (1) zugeführt ist;
einen Leitungstreiber (3) zum Verstärken des empfangenen Übertragungssignals;
einen ersten EMI-Filter (8) zum Beseitigen eines Rauschens des verstärkten Übertragungssignals;
eine Kopplungsschaltungseinheit (4) zum Zusammenpassen mit einer Stromleitung, Übertragen des Übertragungssignals, das vom ersten EMI-Filter (8) ausgegeben ist, an die Stromleitung und Empfangen eines Empfangssignals, das von der Stromleitung übertragen ist;
einen zweiten EMI-Filter (9) zum Beseitigen eines Rauschens des Empfangssignals, das durch die Kopplungsschaltungseinheit zugeführt ist; und
einen Signaldemodulator (6) zum Demodulieren des Empfangssignals, aus dem Rauschen von dem zweiten EMI-Filter beseitigt wurde, und Übertragen der demodulierten Information an einen Empfangsport (7).

2. Vorrichtung nach Anspruch 1, wobei der erste und zweite EMI-Filter (8, 9) mehrere Spulen (L1, L2, L3), die in Reihe geschaltet sind, und mehrere Kondensatoren (C1, C2, C3) umfassen, die an die mehreren Spulen angeschlossen sind.

3. Vorrichtung nach Anspruch 2, wobei der erste und zweite EMI-Filter (8, 9) mehrere Spulen (L1, L2, L3) und mehrere Kondensatoren (C1, C2, C3) zum Aufweisen einer Zeitkonstanten von spezifischen Frequenzkennzeichen gemäß einem Eingangssignal umfassen.

4. Vorrichtung nach Anspruch 2, wobei die Größe der mehreren Spulen (L1, L2, L3) L:B:H = 20:10:10 beträgt, wobei "L" eine Länge, "B" eine Breite und "H" eine Höhe ist und ihre Einheit mm ist.

## Revendications

1. Appareil de communication par ligne d'alimentation électrique comprenant :
un générateur de signaux porteurs (2) pour générer un signal porteur et transmettre un signal de transmission entré via un port de transmission (1) ;
un amplificateur de puissance (3) pour amplifier le signal de transmission reçu ;
un premier filtre anti-interférences électromagnétiques (8) pour supprimer un bruit du signal de transmission amplifié ;
une unité de circuit de couplage (4) pour réaliser un appariement avec une ligne d'alimentation électrique, transmettre le signal de transmission sorti du premier filtre anti-interférences électromagnétiques (8) à la ligne d'alimentation électrique, et recevoir un signal de réception transmis depuis la ligne d'alimentation électrique ;
un second filtre anti-interférences électromagnétiques (9) pour supprimer un bruit du signal de réception entré via l'unité de circuit de couplage ; et
un démodulateur de signaux (6) pour démoduler le signal de réception duquel le bruit a été supprimé par le seconde filtre anti-interférences électromagnétiques, et transmettre l'information démodulée à un port de réception (7).

2. Appareil selon la revendication 1, dans lequel le premier et le second filtre anti-interférences électromagnétiques (8, 9) comprennent une pluralité de bobines (L1, L2, L3) connectées en série et une pluralité de condensateurs (C1, C2, C3) connectés électriquement à la pluralité de bobines.

3. Appareil selon la revendication 2, dans lequel le premier et le second filtre anti-interférences électromagnétiques (8, 9) comprennent une pluralité de bobines (L1, L2, L3) et une pluralité de condensateurs (C1, C2, C3) de manière à avoir une constante temporelle de caractéristiques de fréquence spécifiques fonction d'un signal d'entrée.

4. Appareil selon la revendication 2, dans lequel les tailles de la pluralité de bobines (L1, L2, L3) sont L :1 :H = 20 :10 :10, dans lequel 'L' est une longueur, 'l' est une largeur et 'H' est une hauteur, et leur unité est le mm.
